# EUROPÄISCHE PATENTSCHRIFT

(11) **EP 1 962 391 B1**
(45) Veröffentlichungstag und Bekanntmachung des Hinweises auf die Patenterteilung: **05.04.2017**
(21) Anmeldenummer: 08002344.3
(22) Anmeldetag: 08.02.2008
(51) Int. Cl.: H01R 13/717, H01R 13/66, H01R 13/70

(54) **Installationsgerät mit integrierter Not- und Orientierungsbeleuchtung**
Installation device with integrated emergency and orientation lighting
Appareil d'installation doté d'un éclairage d'urgence et d'orientation intégré

(30) Priorität: 22.02.2007 DE 102007008626
(43) Veröffentlichungstag der Anmeldung: 27.08.2008
(73) Patentinhaber: ABB AG, 68309 Mannheim (DE)
(72) Erfinder: Struwe, Christian, Dipl.-Ing., 96317 Kronach (DE); Ulbrich, Stefan, Dipl.-Ing., 58579 Schalksmühle (DE)
(74) Vertreter: Miller, Toivo

(56) Entgegenhaltungen:
- DE-C1- 19 525 843
- DE-U1-202006 017 015
- US-A1- 2005 135 103
- US-B1- 6 805 469

## Beschreibung

Die Erfindung bezieht sich auf ein Installationsgerät mit integrierter Not- oder Orientierungsbeleuchtung gemäß Anspruch 1. Die Erfindung kann beispielsweise bei Unterputz-Steckdosen, -Schaltern und -Taster verwendet werden.

Aus der DE 10 2004 028 546 B3 ist eine elektrische Steckdose mit einer zumindest ein Lichtleitelement und zumindest ein Leuchtmittel aufweisenden Beleuchtungseinrichtung bekannt, wobei die Beleuchtungseinrichtung nicht nur eine punktuelle, sondern je nach Bedarf eine flächige Signalisierung über das entsprechend ausgebildete Lichtleiterelement ermöglicht, wodurch eine Orientierungsbeleuchtung realisierbar ist.

Aus der DE 20 2006 006 105 U1 ist eine Steckdose bekannt, welche mit Leuchtmitteln ausgerüstet ist, um eine Not- oder Orientierungsbeleuchtung (sogenanntes "Nachtlicht") in Gebäuderäumen zu schaffen. Die Zentralabdeckung weist auf ihrer Vorder- und/oder Unterseite einen Lichtaustritt (Schlitzöffnung) auf, wobei Leuchtmittel (mehrere, insbesondere vier Leuchtdioden) innerhalb der Zentralabdeckung im Bereich des Leuchtaustritts angeordnet sind. Die Beleuchtungseinrichtung weist einen Dämmerungssensor auf, so dass bei eintretender Dunkelheit automatisch die Beleuchtung aktiviert und bei eintretender Helligkeit wieder deaktiviert wird.

Aus der US 2005/135103 A1 ist ein Installationsgerät mit integrierter Not- oder Orientierungsbeleuchtung bekannt, wobei ein aufladbarer Akkumulator oder eine Batterie, ein Helligkeitssensor und ein Bewegungssensor integriert sind, um derart in energieoptimierter und automatisierter Weise und in Abhängigkeit eines aufgetretenen Ausfalls des speisenden Netzes eine Notbeleuchtung mit erhöhter Helligkeit oder eine Orientierungsbeleuchtung mit einer reduzierten Basis-Helligkeit zur Verfügung zu stellen.

Aus der US 6805469 B1 ist ein Installationsgerät mit integrierter Sicherheits-Beleuchtung bekannt, wobei die aus einer integrieren Batterie gespeiste Beleuchtung bei Netzausfall in Abhängigkeit des detektierten Umgebungslichtes eingeschaltet wird. Optional kann die Beleuchtung auch bei intaktem Netz eingeschaltet werden, wobei in diesem Fall eine Energieversorgung aus dem Netz erfolgt.

Der Erfindung liegt die Aufgabe zugrunde, ein Installationsgerät mit integrierter Not- oder Orientierungsbeleuchtung der eingangs genannten Art anzugeben, welche auch bei Auftreten eines Stromausfalls innerhalb einer Wohnung / eines Gebäudes, d. h.
- Ausfall des speisenden 230-V-Netzes (z. B. durch Störung des Energieversorgungsnetzes, wie Beschädigung einer Freileitung, Blitzeinschlag in eine Freileitung usw.),
- Auslösung eines Fehlerstromschutzschalters,
- Auslösung eines Sicherungsautomaten
funktionsfähig bleibt.

Diese Aufgabe wird erfindungsgemäß durch die im Anspruch 1 angegebenen Merkmale gelöst.

Die mit der Erfindung erzielbaren Vorteile bestehen insbesondere darin, dass beim Installationsgerät mit integrierter Not- oder Orientierungsbeleuchtung ("Nachtlicht") auch nach einem Stromausfall eine diffuse Beleuchtung von den erfindungsgemäß ausgestatteten Installationsgeräten erzeugt wird, welche eine Orientierung innerhalb eines Raumes ermöglicht. Gerade bei Ausfall der normalen Beleuchtung infolge eines Stromausfalls ist die erzeugte diffuse Not- oder Orientierungsbeleuchtung zum Auffinden eines Weges oder zur Vermeidung von Panik sehr wertvoll.

Weitere Vorteile sind aus der nachstehenden Beschreibung ersichtlich.

Vorteilhafte Ausgestaltungen der Erfindung sind in den Unteransprüchen gekennzeichnet.

Die Erfindung wird nachstehend anhand der in der Zeichnung dargestellten Ausführungsbeispiele erläutert. Es zeigen:
- Fig. 1: ein mittels Batterie gespeistes Installationsgerät mit integrierter Not- oder Orientierungsbeleuchtung,
- Fig. 2: ein mittels Akkumulator gespeistes Installationsgerät mit integrierter Not- oder Orientierungsbeleuchtung,
- Fig. 3, 4: mittels eines Helligkeitssensors beeinflussbare Installationsgeräte mit integrierter Not- oder Orientierungsbeleuchtung,
- Fig. 5, 6: mittels eines Bewegungssensors beeinflussbare Installationsgeräte mit integrierter Not- oder Orientierungsbeleuchtung,
- Fig. 7: einen Schalter mit integrierter Not- oder Orientierungsbeleuchtung,
- Fig. 8: eine Steckdose mit integrierter Not- oder Orientierungsbeleuchtung.

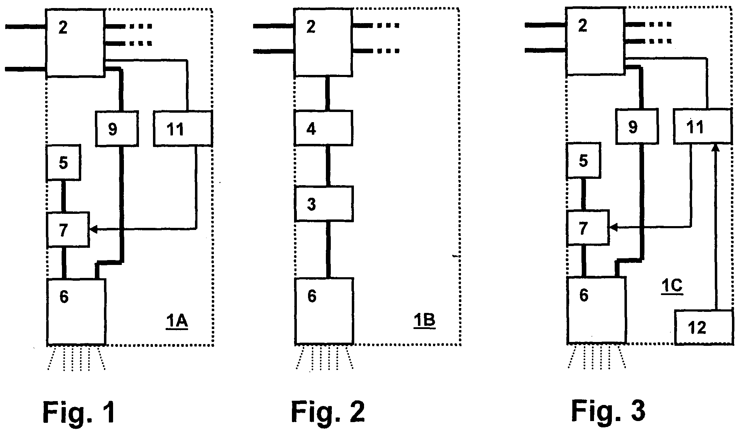

In Fig. 1 ist ein mittels Batterie gespeistes Installationsgerät mit integrierter Not- oder Orientierungsbeleuchtung dargestellt. Das als Steckdose, Schalter oder Taster (in Unterputz- oder Aufputz-Ausführung) ausgeführte Installationsgerät 1A besitzt wie allgemein üblich einen Anschlussklemmenblock 2 für externe Anschlussleitungen, wie Netzleitungen (230-V-Phase, Nulleiter, Schutzleiter) und Lastanschlussleitungen (für eine Decken- oder Wandbeleuchtung). Ein Leuchtmittel 6 (vorzugsweise bestehend aus mindestens einer LED) für Fußbodenbeleuchtung respektive Not- oder Orientierungsbeleuchtung wird im Normalbetrieb - d. h. es liegt kein Stromausfall vor - über ein Netzversorgungsteil 9 und den Anschlussklemmenblock 2 aus dem Netz gespeist.

Eine Auswerteeinheit 11 überwacht die am Anschlussklemmenblock 2 anliegende 230-V-Netzspannung. Detektiert die Auswerteeinheit 11 einen Stromausfall (respektive Spannungsausfall), so steuert sie ein Schaltelement 7 an, worauf das Leuchtmittel 6 mit einer Batterie 5 (Batterie mit hoher Lebensdauer) verbunden wird. Wenn der Stromausfall beseitigt ist, so wird das Schaltelement 7 mittels Ansteuerung durch die Auswerteeinheit 11 wieder geöffnet.

In Fig. 2 ist ein mittels Akkumulator gespeistes Installationsgerät mit integrierter Not- oder Orientierungsbeleuchtung dargestellt. Der Aufbau des Installationsgerätes 1 B entspricht hinsichtlich der Bauteile Anschlussklemmenblock 2 und Leuchtmittel 6 der unter Fig. 1 erläuterten Konfiguration, jedoch ist an Stelle einer Batterie 5 ein Akkumulator 3 vorgesehen, welcher im Normalbetrieb vorzugsweise über eine Wartungsschaltung 4 und den Anschlussklemmenblock 2 aus dem 230-V-Netz aufgeladen wird. Wahlweise kann der Akkumulator auch als ein hochkapazitiver Kondensator (z. B. "Gold Cap") ausgeführt sein. Die Wartungsschaltung 4 stellt stets eine optimale Nachladung des Akkumulators 3 aus dem Netz sicher. Die Speisung des Leuchtmittels 6 erfolgt im Normalbetrieb zweckmäßig über die Reihenschaltung "Netz mit Anschlussklemmenblock 2 - Wartungsschaltung 4 - Akkumulator 3". Liegt ein Strom- respektive Spannungsausfall vor, so erfolgt die Energiespeisung des Leuchtmittels 6 aus dem Akkumulator 3. Sobald der Stromausfall beseitigt ist, wird der Akkumulator 3 wieder über die Wartungsschaltung 4 automatisch nachgeladen.

In Fig. 3 ist eine erste Ausführungsform eines mittels eines Helligkeitssensors beeinflussbaren Installationsgeräts mit integrierter Not- oder Orientierungsbeleuchtung dargestellt. Der Aufbau des Installationsgerätes 1C entspricht hinsichtlich der Bauteile Anschlussklemmenblock 2, Batterie 5, Leuchtmittel 6, Schaltelement 7, Netzversorgungsteil 9 und Auswerteeinheit 11 der unter Fig. 1 erläuterten Konfiguration, jedoch ist zusätzlich ein die Auswerteeinheit 11 beaufschlagender Helligkeitssensor 12 (Dämmerungssensor) vorgesehen. Bei dieser Ausführungsform wird das Leuchtmittel 6 nur eingeschaltet, wenn eine gewisse, einstellbare Helligkeitsschwelle unterschritten wird. Diese Maßnahme verlängert bei Stromausfall die Lebensdauer der Batterie 5 und damit die Brenndauer des Leuchtmittels 6. Wenn der Stromausfall beseitigt ist, so wird das Schaltelement 7 mittels Ansteuerung durch die Auswerteeinheit 11 wieder geöffnet.

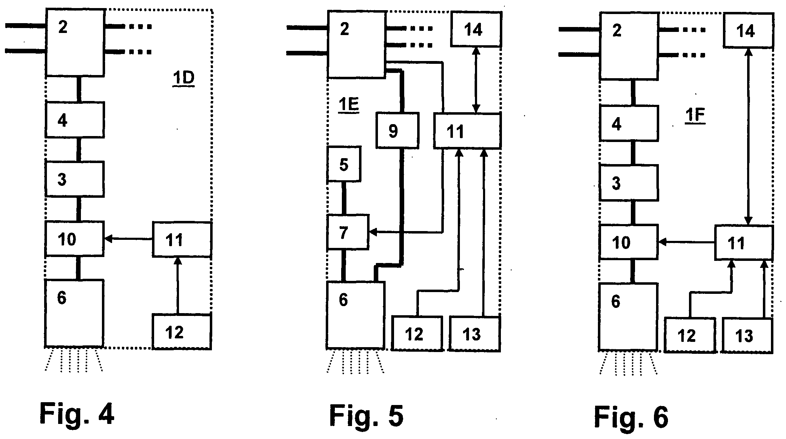

In Fig. 4 ist eine zweite Ausführungsform eines mittels eines Helligkeitssensors beeinflussbaren Installationsgeräts mit integrierter Not- oder Orientierungsbeleuchtung dargestellt. Der Aufbau des Installationsgerätes 1 D entspricht hinsichtlich der Bauteile Anschlussklemmenblock 2, Akkumulator 3, Wartungsschaltung 4 und Leuchtmittel 6 der unter Fig. 2 erläuterten Konfiguration, jedoch sind zusätzlich ein Schaltelement 10 zwischen Akkumulator 3 und Leuchtmittel 6, eine das Schaltelement 10 ansteuernde Auswerteeinheit 11 und ein die Auswerteeinheit 11 beaufschlagender Helligkeitssensor 12 (Dämmerungssensor) vorgesehen. Bei dieser Ausführungsform wird das Leuchtmittel 6 nur bei Dunkelheit eingeschaltet, d. h., wenn eine gewisse, einstellbare Hell igkeitsschwelle unterschritten wird. Diese Maßnahme verlängert bei Stromausfall die "Lebensdauer" des Akkumulators 3 und damit die Brenndauer des Leuchtmittels 6. Sobald der Stromausfall beseitigt ist, wird der Akkumulator 3 über die Wartungsschaltung 4 automatisch nachgeladen.

In Fig. 5 ist eine erfindungsgemäße Ausführungsform eines mittels eines Bewegungssensors beeinflussbaren Installationsgeräts mit integrierter Not- oder Orientierungsbeleuchtung dargestellt. Der Aufbau des Installationsgerätes 1 E entspricht hinsichtlich der Bauteile Anschlussklemmenblock 2, Batterie 5, Leuchtmittel 6, Schaltelement 7, Netzversorgungsteil 9, Auswerteeinheit 11 und Helligkeitssensor 12 der unter Fig. 3 erläuterten Konfiguration, jedoch sind zusätzlich an der Auswerteeinheit 11 ein Bewegungssensor 13 und eine Zeitschaltung 14 angeschlossen. Mittels des Bewegungssensors 13 wird das Leuchtmittel 6 nur eingeschaltet, wenn eine Bewegung einer Person detektiert wird. Mittels der Zeitschaltung 14 wird das Leuchtmittel 6 automatisch wieder ausgeschaltet, wenn während eines definierten, einstellbaren Zeitraumes nach der ersten detektierten Bewegung keine weitere Bewegung mehr detektiert wird. Selbstverständlich erfolgt das Einschalten des Leuchtmittels wiederum, sobald eine weitere Bewegung einer Person detektiert wird. Diese Maßnahme verlängert bei Stromausfall die Lebensdauer der Batterie 5 und damit die Brenndauer des Leuchtmittels 6. Wenn der Stromausfall beseitigt ist, so wird das Schaltelement 7 mittels Ansteuerung durch die Auswerteeinheit 11 wieder geöffnet.

In Fig. 6 ist eine Ausführungsform eines mittels eines Bewegungssensors beeinflussbaren Installationsgeräts mit integrierter Not- oder Orientierungsbeleuchtung dargestellt. Der Aufbau des Installationsgerätes 1 F entspricht hinsichtlich der Bauteile Anschlussklemmenblock 2, Akkumulator 3, Wartungsschaltung 4, Leuchtmittel 6, Schaltelement 10, Auswerteeinheit 11 und Helligkeitssensor 12 der unter Fig. 4 erläuterten Konfiguration, jedoch sind zusätzlich an der Auswerteeinheit 11 ein Bewegungssensor 13 und eine Zeitschaltung 14 angeschlossen. Mittels des Bewegungssensors 13 wird das Leuchtmittel 6 nur eingeschaltet, wenn eine Bewegung einer Person detektiert wird. Mittels der Zeitschaltung 14 wird das Leuchtmittel 6 automatisch wieder ausgeschaltet, wenn während eines definierten, einstellbaren Zeitraumes nach der ersten detektierten Bewegung keine weitere Bewegung mehr detektiert wird. Selbstverständlich erfolgt das Einschalten des Leuchtmittels wiederum, sobald eine weitere Bewegung einer Person detektiert wird. Diese Maßnahme verlängert bei Stromausfall die "Lebensdauer" des Akkumulators 3 und damit die Brenndauer des Leuchtmittels 6. Sobald der Stromausfall beseitigt ist, wird der Akkumulator 3 über die Wartungsschaltung 4 nachgeladen.

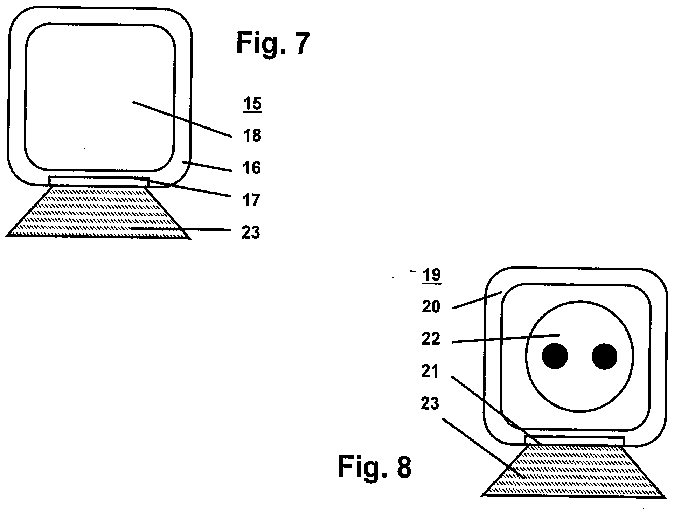

In Fig. 7 ist ein erfindungsgemäßer Schalter mit integrierter Not- oder Orientierungsbeleuchtung dargestellt. Der mindestens eine Wippe 18 aufweisende Schalter 15 weist zweckmäßig am unteren Abschnitt seines Abdeckrahmens 16 eine Lichtaustrittsöffnung 17 (Lichtfenster) für die Abstrahlung des vom Leuchtmittel 6 erzeugten Lichtes auf. Der sich für die "Fußbodenbeleuchtung" ergebende Leuchtbereich 23 ist skizziert.

In Fig. 8 ist eine erfindungsgemäße Steckdose mit integrierter Not- oder Orientierungsbeleuchtung dargestellt. Die eine Zentralscheibe 22 mit Steckdosentopf aufweisende Steckdose 19 weist zweckmäßig am unteren Abschnitt ihres Abdeckrahmens 20 eine Lichtaustrittsöffnung 21 (Lichtfenster) für die Abstrahlung des vom Leuchtmittel 6 erzeugten Lichtes auf. Der sich für die "Fußbodenbeleuchtung" ergebende Leuchtbereich 23 ist skizziert.

### Bezugszeichenliste:

- 1: 1A, 1B, 1C, 1 D, 1 E, 1 F Installationsgerät
- 2: Anschlussklemmenblock für externe Anschlussleitungen
- 3: Akkumulator
- 4: Wartungsschaltung
- 5: Batterie
- 6: Leuchtmittel für Fußbodenbeleuchtung
- 7: Schaltelement
- 8: ---
- 9: Netzversorgungsteil
- 10: Schaltelement
- 11: Auswerteeinheit
- 12: Helligkeitssensor
- 13: Bewegungssensor
- 14: Zeitschaltung
- 15: Schalter
- 16: Abdeckrahmen
- 17: Lichtaustrittsöffnung
- 18: Wippe
- 19: Steckdose
- 20: Abdeckrahmen
- 21: Lichtaustrittsöffnung
- 22: Zentralscheibe mit Steckdosentopf
- 23: Leuchtbereich "Fußbodenbeleuchtung"

## Patentansprüche

1. Steckdose, Schalter oder Taster, mit einem Anschlussklemmenblock (2) für den Anschluss mindestens einer Netzleitung und mit einem Leuchtmittel (6) als integrierte Not- oder Orientierungsbeleuchtung,
a) wobei die Speisung des Leuchtmittels (6) nach einem Stromausfall über eine Batterie (5) mit hoher Lebensdauer erfolgt,
b) wobei die Überwachung der mindestens einen Netzleitung auf Spannung mittels einer Auswerteeinheit (11) erfolgt,
c) wobei die Auswerteeinheit (11) ein zwischen Batterie (5) und Leuchtmittel (6) gefügtes Schaltelement (7) ansteuert,
d) wobei ein Helligkeitssensor (12) die Auswerteeinheit (11) derart beaufschlagt, dass ein Einschalten des Leuchtmittels (6) nur unterhalb einer einstellbaren Helligkeitsschwelle erfolgt,
e) wobei ein Bewegungssensor (13) die Auswerteeinheit (11) derart beaufschlagt, dass ein Einschalten des Leuchtmittels (6) nur nach Detektion einer Bewegung, z. B. einer Person erfolgt,
f) wobei eine Zeitschaltung (14) die Auswerteeinheit (11) beaufschlagt, um das Leuchtmittel (6) auszuschalten, wenn während eines definierten, einstellbaren Zeitraumes nach der ersten detektierten Bewegung keine weitere Bewegung mehr detektiert wird,
g) wobei ein Netzversorgungsteil (9) zur Speisung des Leuchtmittels (6) aus dem Netz im Normalbetrieb vorgesehen ist,
h) wobei die Steckdose, der Schalter oder der Taster am unteren Abschnitt seines Abdeckrahmens (16, 20) eine Lichtaustrittsöffnung (17, 21) für die Abstrahlung des vom Leuchtmittel (6) erzeugten Lichtes aufweist.

## Claims

1. Socket, switch or pushbutton, comprising a connection terminal block (2) for the connection of at least one mains line and comprising an illuminant (6) as integrated emergency or orientation lighting,
a) wherein after a power failure the illuminant (6) is fed via a battery (5) with a long lifetime,
b) wherein the at least one mains line is monitored for voltage by means of an evaluation unit (11),
c) wherein the evaluation unit (11) drives a switching element (7) inserted between battery (5) and illuminant (6),
d) wherein a brightness sensor (12) acts on the evaluation unit (11) in such a way that the illuminant (6) is switched on only below an adjustable brightness threshold,
e) wherein a motion sensor (13) acts on the evaluation unit (11) in such a way that the illuminant (6) is switched on only after detection of a movement, e.g. of a person,
f) wherein a timing circuit (14) acts on the evaluation unit (11) in order to switch off the illuminant (6) if a further movement is no longer detected during a defined, adjustable period of time after the first detected movement,
g) wherein a power supply unit (9) for feeding the illuminant (6) from the mains during normal operation is provided,
h) wherein the socket, the switch or the pushbutton has, on the lower section of its covering frame (16, 20), a light exit opening (17, 21) for the emission of the light generated by the illuminant (6) .

## Revendications

1. Prise, commutateur ou bouton comportant un bornier (2) destiné à raccorder au moins une ligne de réseau et comportant un moyen d'éclairage (6) sous la forme d'un éclairage intégré d'urgence ou d'orientation,
a) dans lequel l'alimentation du moyen d'éclairage (16) s'effectue après une panne de courant par l'intermédiaire d'une batterie (5) ayant une durée de vie élevée,
b) dans lequel la surveillance de la tension de l'au moins une ligne de réseau est effectuée au moyen d'une unité d'évaluation (11),
c) dans lequel l'unité d'évaluation (11) commande un élément de commutation (7) interposé entre la batterie (5) et le moyen d'éclairage (6),
d) dans lequel un capteur de luminosité (12) attaque l'unité d'évaluation (11) de manière à n'effectuer une activation du moyen d'éclairage (6) qu'en dessous d'un seuil de luminosité réglable,
e) dans lequel un capteur de mouvement (13) attaque l'unité d'évaluation (11) de manière à n'activer le moyen d'éclairage (6) qu'après la détection d'un mouvement, par exemple d'une personne,
f) dans lequel un temporisateur (14) attaque l'unité d'évaluation (11) afin de désactiver le moyen d'éclairage (6) lorsqu'aucun autre mouvement n'est détecté pendant un intervalle de temps défini réglable après le premier mouvement détecté,
g) dans lequel il est prévu une partie d'alimentation sur secteur (9) destinée à alimenter le moyen d'éclairage (6) à partir du secteur lors d'un fonctionnement normal,
h) dans lequel la prise, le commutateur ou le bouton présente, sur une partie inférieure de son châssis d'installation (16, 20), une ouverture de sortie de lumière (17, 21) destinée au rayonnement de la lumière générée par le moyen d'éclairage (6).
